# EUROPEAN PATENT APPLICATION

(11) **EP 4 730 237 A1**
(43) Date of publication of application: **22.04.2026**
(21) Application number: 25200432.0
(22) Date of filing: 05.09.2025
(51) Int. Cl.: G06Q 10/08, G06Q 10/083, G06Q 10/10, G06Q 10/109, G06Q 30/016

(54) **VEHICLE DELIVERY HANDLING SUPPORT METHOD, INFORMATION PROCESSING APPARATUS, AND STORAGE MEDIUM**

(30) Priority: 18.10.2024 JP 2024184452
(71) Applicant: TOYOTA JIDOSHA KABUSHIKI KAISHA, Toyota-shi, Aichi-ken 471-8571 (JP)
(72) Inventor: MORISHITA, Hirofumi, Toyota-shi, Aichi-ken, 471-8571 (JP)
(74) Representative: TBK

(57) **Abstract**

A vehicle delivery handling support method to be executed by an information processing apparatus (10), the vehicle delivery handling support method includes acquiring purchased vehicle information based on first speech data that is acquired in a business talk for selling a vehicle, generating a list including a plurality of matters to be confirmed in explanation upon delivery of the vehicle corresponding to the business talk based on the purchased vehicle information, determining whether each of the matters to be confirmed has been confirmed in the explanation upon delivery of the vehicle based on second speech data and the list, the second speech data being acquired in the explanation upon delivery of the vehicle, and outputting a determination result.

## Description

### BACKGROUND OF THE INVENTION

### 1. Field of the Invention

The present disclosure relates to a vehicle delivery handling support method, an information processing apparatus, and a storage medium.

### 2. Description of Related Art

As related technologies, a technology of analyzing content of a business talk is known. For example, Japanese Unexamined Patent Application Publication No. 2019-28910 (JP 2019-28910 A) discloses a dialogue analysis system that checks whether a sales person has explained matters that should be explained and has not mentioned matters that should not be mentioned in a business talk with a customer.

### SUMMARY OF THE INVENTION

Information during a business talk can be analyzed through machine learning, or the like. However, it has not been sufficiently studied to utilize the information during the business talk in other scenes. In particular, it has not been studied to utilize information in a business talk regarding sales of a vehicle to improve quality of handling by a staff when the staff provides an explanation upon delivery of the vehicle, and there is room for improvement in a technology of supporting handling upon delivery of the vehicle.

The present disclosure provides a technology of improving a technology of supporting handling upon delivery of a vehicle.

A method according to an embodiment of the present disclosure is a vehicle delivery handling support method to be executed by an information processing apparatus, the vehicle delivery handling support method including:
acquiring purchased vehicle information based on first speech data that is acquired in a business talk for selling a vehicle;
generating, based on the purchased vehicle information, a list including a plurality of matters to be confirmed in explanation upon delivery of the vehicle corresponding to the business talk;
determining whether each of the matters to be confirmed has been confirmed in the explanation upon delivery of the vehicle based on second speech data and the list, the second speech data being acquired in the explanation upon delivery of the vehicle; and
outputting a determination result.

According to an embodiment of the present disclosure, a technology of supporting handling upon delivery of a vehicle is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating a schematic configuration of a system according to the present embodiment; and
FIG. 2 is a flowchart indicating operation of an information processing apparatus.

### DETAILED DESCRIPTION OF EMBODIMENTS

An embodiment of the present disclosure will be described below.

### Outline of Embodiment

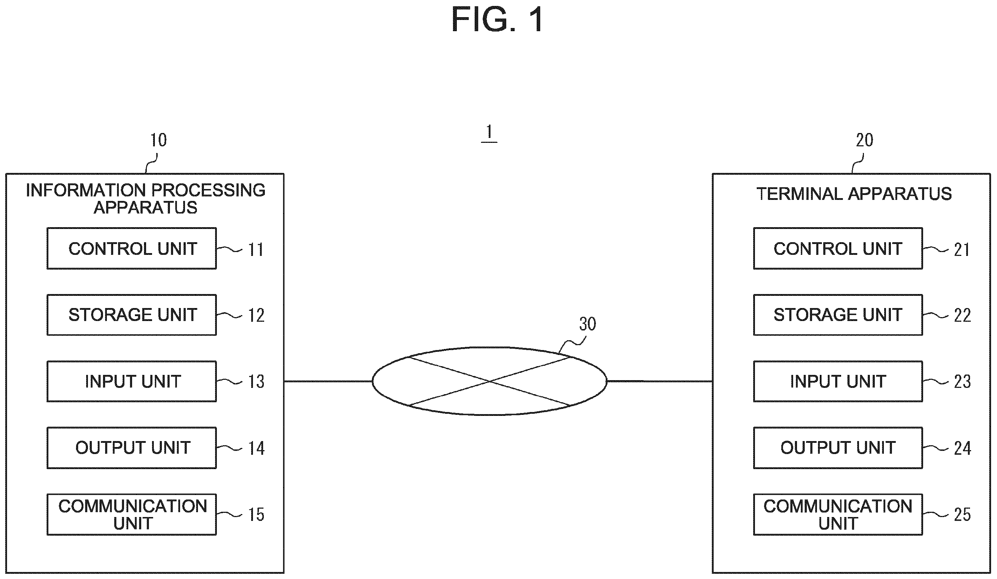

Outline and a configuration of a system 1 according to the present embodiment will be described with reference to FIG. 1. The system 1 according to the present embodiment includes an information processing apparatus 10 and a terminal apparatus 20. The information processing apparatus 10 and the terminal apparatus 20 are communicably connected to a network 30 including, for example, a mobile communication network, the Internet, and the like.

The information processing apparatus 10 is, for example, a server apparatus provided in a data center, or the like. For example, the information processing apparatus 10 is a server belonging to a cloud computing system or other computing systems. Note that while FIG. 1 illustrates an example where the system 1 includes one information processing apparatus 10, the present disclosure is not limited to this example. The system 1 may include two or more information processing apparatuses 10.

The terminal apparatus 20 is an arbitrary apparatus to be used by a staff related to sales of a vehicle and delivery of the vehicle. For example, a general-purpose electronic device such as a personal computer, a smartphone, a tablet terminal, and a wearable terminal or a dedicated electronic device can be used as the terminal apparatus 20. Note that while FIG. 1 illustrates an example where the system 1 includes one terminal apparatus 20, the present disclosure is not limited to this example, and the system 1 may include two or more terminal apparatuses 20.

First, outline of the present embodiment will be described, and details will be described later. A technology of supporting handling upon delivery of a vehicle according to the present embodiment is executed by the information processing apparatus 10. The information processing apparatus 10 acquires purchased vehicle information based on first speech data that is acquired in a business talk for selling a vehicle. Further, the information processing apparatus 10 generates a list of a plurality of matters to be confirmed that is to be confirmed in explanation upon delivery of the vehicle corresponding to the business talk based on the purchased vehicle information. Then, the information processing apparatus 10 determines a confirmation status of the matters to be confirmed based on second speech data in the explanation upon delivery of the vehicle and the list and displays a determination result. Here, the first speech data in the business talk is business talk recorded data in the business talk for selling the vehicle with a customer. Further, the explanation upon delivery of the vehicle corresponding to the business talk includes explanation to be performed by a staff when the staff delivers the vehicle contracted in the business talk to the customer. the second speech data is acquired in in the explanation upon delivery of the vehicle. Still further, the second speech data is real-time speech data in the explanation upon delivery of the vehicle corresponding to the business talk.

In this manner, according to the present embodiment, the purchased vehicle information is acquired based on the first speech data in the business talk for selling the vehicle, and the list of the matters to be confirmed that is to be confirmed in the explanation upon delivery of the vehicle is generated based on the purchased vehicle information. Then, the confirmation status of the matters to be confirmed is determined based on the second speech data in the explanation upon delivery of the vehicle and the list. The technology of supporting handling upon delivery of the vehicle is improved in that the matters to be confirmed are covered based on the first speech data in the business talk, and further, the confirmation statuses related to the matters to be confirmed are determined based on the second speech data in the explanation upon delivery of the vehicle.

Each configuration of the information processing apparatus 10 and the terminal apparatus 20 will be described in detail next.

### Configuration of Information Processing Apparatus 10

As illustrated in FIG. 1, the information processing apparatus 10 includes a control unit 11, a storage unit 12, an input unit 13, an output unit 14, and a communication unit 15.

The control unit 11 includes at least one processor, at least one dedicated circuit or a combination of these. The processor is a general-purpose processor such as a central processing unit (CPU) and a graphics processing unit (GPU) or a dedicated processor dedicated to specific processing. The dedicated circuit is, for example, a field-programmable gate array (FPGA) or an application specific integrated circuit (ASIC). The control unit 11 executes processing regarding operation of the information processing apparatus 10 while controlling each unit of the information processing apparatus 10.

The storage unit 12 includes at least one semiconductor memory, at least one magnetic memory, at least one optical memory or a combination of at least two types among these. The semiconductor memory is, for example, a random access memory (RAM) or a read only memory (ROM). The RAM is, for example, a static random access memory (SRAM) or a dynamic random access memory (DRAM). The ROM is, for example, an electrically erasable programmable read only memory (EEPROM). The storage unit 12 functions as, for example, a main storage device, an auxiliary storage device or a cache memory. In the storage unit 12, data to be used for operation of the information processing apparatus 10, and data obtained as a result of the operation of the information processing apparatus 10 are stored.

The input unit 13 includes at least one input interface. The input interface is, for example, a physical key, a capacitance key, a pointing device, or a touch screen integrally provided with a display. Further, the input interface may be, for example, a sound sensor that accepts a sound input, a camera that accepts a gesture input, or the like. The input unit 13 accepts operation of inputting data to be used for the operation of the information processing apparatus 10. The input unit 13 may be connected to the information processing apparatus 10 as an external input device instead of being provided in the information processing apparatus 10. As a connection scheme, an arbitrary scheme such as, for example, a universal serial bus (USB), a high-definition multimedia interface (HDMI) (registered trademark) or Bluetooth (registered trademark) can be used.

The output unit 14 includes at least one output interface. The output interface is, for example, a display that outputs information as a video, a speaker that outputs information as sound, or the like. The display is, for example, a liquid crystal display (LCD) or an organic electroluminescence (EL) display. The output unit 14 outputs data obtained as a result of the operation of the information processing apparatus 10. The output unit 14 may be connected to the information processing apparatus 10 as an external output device instead of being provided in the information processing apparatus 10. As a connection scheme, an arbitrary scheme such as, for example, a USB, an HDMI (registered trademark) or Bluetooth (registered trademark) can be used.

The communication unit 15 includes at least one external communication interface. The communication interface may be an interface of either wired communication or wireless communication. In a case of wired communication, the communication interface is, for example, a local area network (LAN) interface or a universal serial bus (USB). In a case of wireless communication, the communication interface is, for example, an interface that supports mobile communication standards such as long term evolution (LTE), 4th generation (4G) or 5th generation (5G), or an interface that supports near field communication such as Bluetooth (registered trademark). The communication unit 15 receives data to be used for the operation of the information processing apparatus 10 and transmits data obtained as a result of the operation of the information processing apparatus 10.

Functions of the information processing apparatus 10 are implemented by a program according to the present embodiment being executed by a processor corresponding to the control unit 11. In other words, the functions of the information processing apparatus 10 are implemented by software. The program causes a computer to function as the information processing apparatus 10 by causing the computer to execute the operation of the information processing apparatus 10. In other words, the computer functions as the information processing apparatus 10 by executing the operation of the information processing apparatus 10 in accordance with the program.

In the present embodiment, the program can be recorded in a computer-readable recording medium. The computer-readable recording medium includes a non-transitory computer-readable medium, and is, for example, a magnetic storage device, an optical disk, a magnetooptical medium or a semiconductor memory. The program is distributed by, for example, a portable recording medium such as a digital versatile disc (DVD) or a compact disc read only memory (CD-ROM), in which the program is recorded being sold, given or lent. Further, the program may be distributed by being stored in a storage of an external server and transmitted to other computers from the external server. Still further, the program may be provided as a program product.

Some or all of the functions of the information processing apparatus 10 may be implemented by a dedicated circuit corresponding to the control unit 11. In other words, some or all of the functions of the information processing apparatus 10 may be implemented by hardware.

### Configuration of Terminal Apparatus 20

As illustrated in FIG. 1, the terminal apparatus 20 includes a control unit 21, a storage unit 22, an input unit 23, an output unit 24, and a communication unit 25.

The control unit 21 includes at least one processor, at least one dedicated circuit or a combination of these. The processor is a general-purpose processor such as a central processing unit (CPU) or a graphics processing unit (GPU) or a dedicated processor dedicated to specific processing. The dedicated circuit is, for example, a field-programmable gate array (FPGA) or an application specific integrated circuit (ASIC). The control unit 21 executes processing regarding operation of the terminal apparatus 20 while controlling each unit of the terminal apparatus 20.

The storage unit 22 includes at least one semiconductor memory, at least one magnetic memory, at least one optical memory or a combination of at least two types among these. The semiconductor memory is, for example, a random access memory (RAM) or a read only memory (ROM). The RAM is, for example, a static random access memory (SRAM) or a dynamic random access memory (DRAM). The ROM is, for example, an electrically erasable programmable read only memory (EEPROM). The storage unit 22 functions as, for example, a main storage device, an auxiliary storage device or a cache memory. In the storage unit 22, data to be used for the operation of the terminal apparatus 20 and data obtained as a result of the operation of the terminal apparatus 20 are stored.

The input unit 23 includes at least one input interface. The input interface is, for example, a physical key, a capacitance key, a pointing device, or a touch screen integrally provided with a display. Further, the input interface may be, for example, a sound sensor that accepts a sound input, a camera that accepts a gesture input, or the like. The input unit 23 accepts operation of inputting data to be used for the operation of the terminal apparatus 20. The input unit 23 may be connected to the terminal apparatus 20 as an external input device instead of being provided in the terminal apparatus 20. As a connection scheme, an arbitrary scheme such as, for example, a universal serial bus (USB), a high-definition multimedia interface (HDMI) (registered trademark), or Bluetooth (registered trademark) can be used.

The output unit 24 includes at least one output interface. The output interface is, for example, a display that outputs information as a video, a speaker that outputs information as sound, or the like. The display is, for example, a liquid crystal display (LCD) or an organic electroluminescence (EL) display. The output unit 24 outputs data obtained as a result of the operation of the terminal apparatus 20. The output unit 24 may be connected to the terminal apparatus 20 as an external output device instead of being provided in the terminal apparatus 20. As a connection scheme, an arbitrary scheme such as, for example, a USB, an HDMI (registered trademark) or Bluetooth (registered trademark) can be used.

The communication unit 25 includes at least one external communication interface. The communication interface may be an interface of either wired communication or wireless communication. In a case of wired communication, the communication interface is, for example, a local area network (LAN) interface or a universal serial bus (USB). In a case of wireless communication, the communication interface is, for example, an interface that supports mobile communication standards such as long term evolution (LTE), 4th generation (4G) or 5th generation (5G), or an interface that supports near field communication such as Bluetooth (registered trademark). The communication unit 25 receives data to be used for the operation of the terminal apparatus 20 and transmits data obtained as a result of the operation of the terminal apparatus 20.

Functions of the terminal apparatus 20 are implemented by the program according to the present embodiment being executed by a processor corresponding to the control unit 21. In other words, the functions of the terminal apparatus 20 are implemented by software. The program causes a computer to function as the terminal apparatus 20 by causing the computer to execute the operation of the terminal apparatus 20. In other words, the computer functions as the terminal apparatus 20 by executing the operation of the terminal apparatus 20 in accordance with the program.

Some or all of the functions of the terminal apparatus 20 may be implemented by a dedicated circuit corresponding to the control unit 21. In other words, some or all of the functions of the terminal apparatus 20 may be implemented by hardware.

### Operation of Information Processing Apparatus 10

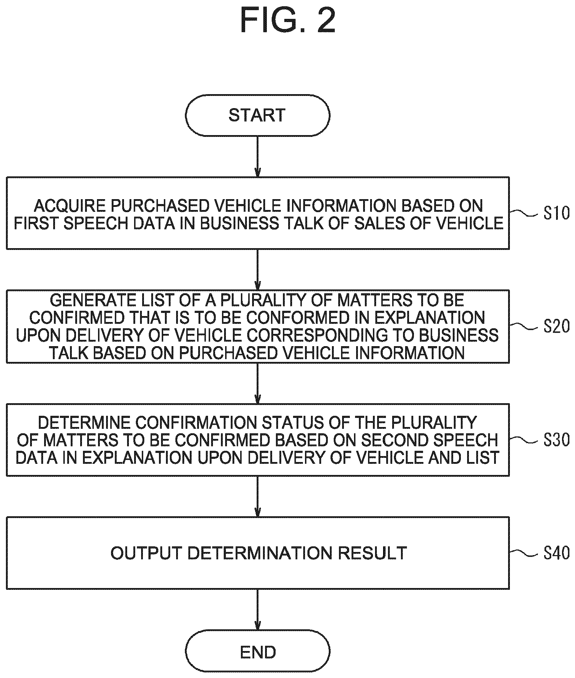

The operation of the information processing apparatus 10 according to the present embodiment will be described with reference to FIG. 2.

In step S10, the control unit 11 of the information processing apparatus 10 acquires purchased vehicle information based on first speech data in a business talk for selling a vehicle.

The first speech data may be acquired using an arbitrary method. For example, the control unit 11 may acquire the first speech data from an external apparatus, and the like, including the terminal apparatus 20 via the communication unit 15 and the network 30. Further, for example, the control unit 11 may acquire the first speech data via the input unit 13.

The purchased vehicle information includes at least one of a model of the vehicle, options, color or commitments. The purchased vehicle information based on the first speech data may be acquired using an arbitrary method. For example, the control unit 11 may acquire the purchased vehicle information by extracting a keyword related to the purchased vehicle information from transcript data related to the first speech data generated by a speech recognition technique. Alternatively, for example, the control unit 11 may acquire the purchased vehicle information using a learned model. Specifically, for example, the control unit 11 may acquire the purchased vehicle information by inputting the first speech data to the learned model as an explanation variable and causing the learned model to output the purchased vehicle information.

The learned model is a model created by machine learning using a machine learning algorithm. The learned model may be, for example, a machine learning model constructed based on a decision tree. The machine learning model constructed based on the decision tree is, for example, LightGBM, XGBoost, or the like, but is not limited to these. Alternatively, the learned model may be a model generated based on a machine learning algorithm such as a convolutional neural network (CNN), a recurrent neural network (RNN) and other deep learning.

In step S20, the control unit 11 generates a list including a plurality of matters to be confirmed that is to be confirmed in explanation upon delivery of the vehicle corresponding to the business talk based on the purchased vehicle information.

The matters to be confirmed includes at least one of confirmation of various kinds of documents, explanation of equipment of the vehicle, explanation of functions of the vehicle, confirmation of a manipulation method, confirmation of a scratch of the vehicle, confirmation of a dent, deformation, and the like, of the vehicle (hereinafter, also referred to as confirmation of a dent of the vehicle), confirmation of deficiencies of equipment, confirmation of signature of receipt of the vehicle, confirmation of the need to feed gasoline, confirmation of receipt of payment, procedure of automobile insurance, commitments related to schedule of the explanation upon delivery of the vehicle, or commitments related to a vehicle delivery ceremony. Processing of generating the list of the matters to be confirmed may be performed using an arbitrary method. For example, the control unit 11 may generate the list of the matters to be confirmed with reference to a confirmation matter table determined in advance in accordance with the model of the vehicle, equipment, functions, and the like. Further, for example, the control unit 11 may use a learned model for generating the list.

In step S30, the control unit 11 determines a confirmation status of the matters to be confirmed based on second speech data in the explanation upon delivery of the vehicle and the list. In other words, the control unit 11 determines whether each of the matters to be confirmed has been confirmed in the explanation upon delivery of the vehicle based on the second speech data in the explanation upon delivery of the vehicle and the list.

The second speech data may be acquired using an arbitrary method. For example, the control unit 11 may acquire the second speech data from an external apparatus, and the like, including the terminal apparatus 20 via the communication unit 15 and the network 30. Further, for example, the control unit 11 may acquire the second speech data via the input unit 13.

Processing of determining the confirmation status may be performed using an arbitrary method. For example, the control unit 11 may execute the processing of determining the confirmation statuses by extracting keywords related to the confirmation statuses of the matters to be confirmed in the list from real-time transcript data related to the second speech data generated by a speech recognition technique. Alternatively, for example, the control unit 11 may use a learned model related to determination processing. Specifically, for example, the control unit 11 may input the list and the second speech data to the learned model as explanation variables and determine the confirmation statuses using the learned model.

In step S40, the control unit 11 outputs the determination result related to the confirmation statuses.

Processing of outputting the determination result may be performed using an arbitrary method. For example, the control unit 11 may transmit data to the terminal apparatus 20 via the communication unit 15 so as to output the determination result through a user interface through which the output unit 24 of the terminal apparatus 20 performs display and output. Alternatively, the control unit 11 may output the determination result through a user interface through which the output unit 14 performs display and output.

As described above, the information processing apparatus 10 according to the present embodiment acquires the purchased vehicle information based on the first speech data in the business talk for selling the vehicle. Further, the information processing apparatus 10 generates the list of the matters to be confirmed that is to be confirmed in the explanation upon delivery of the vehicle corresponding to the business talk based on the purchased vehicle information. Then, the information processing apparatus 10 determines the confirmation status of the matters to be confirmed based on the second speech data in the explanation upon delivery of the vehicle, and the list, and displays the determination result.

In this manner, according to the present embodiment, the purchased vehicle information is acquired based on the first speech data in the business talk for selling the vehicle, and the list of the matters to be confirmed that is to be confirmed in the explanation upon delivery of the vehicle is generated based on the purchased vehicle information. Then, the confirmation status of the matters to be confirmed is determined based on the second speech data in the explanation upon delivery of the vehicle and the list. The technology of supporting handling upon delivery of the vehicle is improved in that the matters to be confirmed are covered based on the first speech data in the business talk, and further, the confirmation statuses related to the matters to be confirmed are determined based on the second speech data in the explanation upon delivery of the vehicle.

While the present disclosure has been described based on various drawings and examples, it should be noted that a person skilled in the art may make various modifications and changes based on the present disclosure. Thus, it should be noted that these modifications and changes are included in the scope of the present disclosure. For example, functions included in respective components, respective steps, or the like, can be rearranged so as not to cause logical inconsistencies, and a plurality of components, steps, o the like, can be combined into one or divided.

For example, the control unit 11 may output an alert based on the determination result when there is a matter that is not handled among the matters to be confirmed. This allows the staff to easily grasp a matter that is not handled.

Further, for example, priority may be associated with the matters to be confirmed. Further, the control unit 11 may set only matters to be confirmed having priority equal to or higher than predetermined priority as confirmation targets in accordance with a purchaser of the vehicle. For example, the control unit 11 may determine personality information of the purchaser of the vehicle based on the first speech data. The personality information may be determined by, for example, stages such as extremely impetuous, impetuous, somewhat impetuous, medium, slightly gentle, gentle, extremely gentle, and the like. The control unit 11 may determine a threshold related to the priority based on the personality information. The control unit 11 may set only matters to be confirmed having priority equal to or higher than the predetermined priority among the matters to be confirmed in the list as the confirmation targets. This makes it possible to support implementation of confirmation in the explanation upon delivery of the vehicle in accordance with personality of the purchaser of the vehicle. Specifically, if the purchaser has impetuous personality, only matters to be confirmed with high priority may be set as the matters to be confirmed based on the threshold corresponding to the personality. In other words, the matters to be confirmed with priority less than the threshold may be excluded from the list.

Further, for example, when the matters to be confirmed includes explanation items of at least one of equipment of the vehicle or functions of the vehicle, the control unit 11 may adjust the explanation items based on past purchase history of the purchaser. For example, when the purchaser has purchased a vehicle equipped with the same or equivalent functions in the past, the explanation items may be adjusted. Processing of adjusting the explanation items may be performed using an arbitrary method. For example, the explanation items may be adjusted using an arbitrary method such as a method in which some of the explanation items are omitted or a method in which some of the explanation items are detailed.

Further, for example, each keyword corresponding to the matters to be confirmed may be displayed at the terminal apparatus 20. In this case, the control unit 11 determines the confirmation status of the matters to be confirmed based on the keyword in the second speech data. By clearly specifying the keywords related to the matters to be confirmed in this manner, it is possible to cause the staff to utter the keywords, which results in making it possible to improve accuracy of the processing of determining the confirmation statuses of the matters to be confirmed.

Further, for example, in the above-described embodiment, an embodiment is also possible in which the components and the operation of the information processing apparatus 10 are dispersed to a plurality of computers that can perform communication with each other.

Some of the embodiments of the present disclosure will be exemplified below. However, it should be noted that the embodiments of the present disclosure are not limited to these.

### Supplementary Note 1

A vehicle delivery handling support method to be executed by an information processing apparatus, the vehicle delivery handling support method including:
acquiring purchased vehicle information based on first speech data that is acquired in a business talk for selling a vehicle;
generating, based on the purchased vehicle information, a list including a plurality of matters to be confirmed in explanation upon delivery of the vehicle corresponding to the business talk;
determining whether each of the matters to be confirmed has been confirmed in the explanation upon delivery of the vehicle based on second speech data and the list, the second speech data being acquired in the explanation upon delivery of the vehicle; and
outputting a determination result.

### Supplementary Note 2

The vehicle delivery handling support method according to Supplementary Note 1, in which the purchased vehicle information includes at least one of a model of the purchased vehicle, options of the purchased vehicle, color of the purchased vehicle or commitments.

### Supplementary Note 3

The vehicle delivery handling support method according to Supplementary Note 1 or 2, further including outputting an alert when it is determined that there is a matter that is not handled in the matters to be confirmed.

### Supplementary Note 4

The vehicle delivery handling support method according to any one of Supplementary Notes 1 to 3, in which the matters to be confirmed includes at least one of confirmation of various kinds of documents, explanation of equipment of the purchased vehicle, explanation of functions of the purchased vehicle, confirmation of a manipulation method of the purchased vehicle, confirmation of a scratch of the purchased vehicle, confirmation of a dent of the purchased vehicle, confirmation of deficiencies of equipment of the purchased vehicle, confirmation of signature of receipt of the purchased vehicle, confirmation of need to feed gasoline to the purchased vehicle, confirmation of receipt of payment, procedure of automobile insurance, commitments related to schedule of the explanation upon delivery of the vehicle, or commitments related to a vehicle delivery ceremony.

### Supplementary Note 5

The vehicle delivery handling support method according to any one of Supplementary Notes 1 to 4, in which each of the matters to be confirmed is associated with priority, and the vehicle delivery handling support method further includes: determining a threshold of the priority based on personality information of a purchaser based on the first speech data; and generating the list including only a matter to be confirmed with the priority equal to or higher than the threshold among the matters to be confirmed in the list.

### Supplementary Note 6

The vehicle delivery handling support method according to any one of Supplementary Notes 1 to 5, in which the matters to be confirmed in the list includes at least one of explanation items of equipment of the purchased vehicle or explanation items of functions of the purchased vehicle, and the vehicle delivery handling support method further includes adjusting the explanation items in the list based on past purchase history of a purchaser.

### Supplementary Note 7

The vehicle delivery handling support method according to any one of Supplementary Notes 1 to 6, further including: displaying a keyword corresponding to the matters to be confirmed on a display; and determining whether each of the matters to be confirmed has been confirmed in the explanation upon delivery of the vehicle based on the keyword included in the second speech data.

### Supplementary Note 8

An information processing apparatus including one or more processors configured to
acquire purchased vehicle information based on first speech data that is acquired in a business talk for selling a vehicle;
generate, based on the purchased vehicle information, a list including a plurality of matters to be confirmed in explanation upon delivery of the vehicle corresponding to the business talk;
determine whether each of the matters to be confirmed has been confirmed in the explanation upon delivery of the vehicle based on second speech data and the list, the second speech data being acquired in the explanation upon delivery of the vehicle; and
output a determination result.

### Supplementary Note 9

A non-transitory storage medium storing instructions that are executable by one or more processors and that cause the one or more processors to perform functions including:
acquiring purchased vehicle information based on first speech data that is acquired in a business talk for selling a vehicle;
generating, based on the purchased vehicle information, a list including a plurality of matters to be confirmed in explanation upon delivery of the vehicle corresponding to the business talk;
determining whether each of the matters to be confirmed has been confirmed in the explanation upon delivery of the vehicle based on second speech data and the list, the second speech data being acquired in the explanation upon delivery of the vehicle; and
outputting a determination result.

### Supplementary Note 10

The vehicle delivery handling support method according to Supplementary Notes 1 to 7, in which adjusting the explanation items in the list includes at least one of omitting some of the explanation items or making some of the explanation items detailed.

### Supplementary Note 11

The vehicle delivery handling support method according to Supplementary Notes 1 to 7, further including:
determining whether the purchaser has previously purchased a vehicle equipped with the same or equivalent functions; and
when it is determined that the purchaser has previously purchased a vehicle equipped with the same or equivalent functions, omitting some of the explanation items in the list.

## Claims

1. A vehicle delivery handling support method to be executed by an information processing apparatus (10), the vehicle delivery handling support method comprising:
acquiring purchased vehicle information based on first speech data that is acquired in a business talk for selling a vehicle;
generating, based on the purchased vehicle information, a list including a plurality of matters to be confirmed in explanation upon delivery of the vehicle corresponding to the business talk;
determining whether each of the matters to be confirmed has been confirmed in the explanation upon delivery of the vehicle based on second speech data and the list, the second speech data being acquired in the explanation upon delivery of the vehicle; and
outputting a determination result.

2. The vehicle delivery handling support method according to claim 1, wherein the purchased vehicle information includes at least one of a model of the purchased vehicle, options of the purchased vehicle, color of the purchased vehicle, or commitments.

3. The vehicle delivery handling support method according to claim 1, further comprising outputting an alert when it is determined that there is a matter that is not handled among the matters to be confirmed.

4. The vehicle delivery handling support method according to claim 1, wherein the matters to be confirmed includes at least one of confirmation of various kinds of documents, explanation of equipment of the purchased vehicle, explanation of functions of the purchased vehicle, confirmation of a manipulation method of the purchased vehicle, confirmation of a scratch of the purchased vehicle, confirmation of a dent of the purchased vehicle, confirmation of deficiencies of equipment of the purchased vehicle, confirmation of signature of receipt of the purchased vehicle, confirmation of need to feed gasoline to the purchased vehicle, confirmation of receipt of payment, procedure of automobile insurance, commitments related to schedule of the explanation upon delivery of the vehicle, or commitments related to a vehicle delivery ceremony.

5. The vehicle delivery handling support method according to claim 1, wherein:
each of the matters to be confirmed is associated with priority; and
the vehicle delivery handling support method further comprises:
determining a threshold of the priority based on personality information of a purchaser, the personality information being determined based on the first speech data; and
generating the list including only a matter to be confirmed with the priority equal to or higher than the threshold among the matters to be confirmed in the list.

6. The vehicle delivery handling support method according to claim 1, wherein:
the matters to be confirmed in the list includes at least one of explanation items of equipment of the purchased vehicle or explanation items of functions of the purchased vehicle; and
the vehicle delivery handling support method further comprises adjusting the explanation items in the list based on past purchase history of a purchaser.

7. The vehicle delivery handling support method according to claim 1, further comprising:
displaying a keyword corresponding to the matters to be confirmed on a display; and
determining whether each of the matters to be confirmed has been confirmed in the explanation upon delivery of the vehicle based on the keyword included in the second speech data.

8. An information processing apparatus comprising one or more processors configured to:
acquire purchased vehicle information based on first speech data that is acquired in a business talk for selling a vehicle;
generate, based on the purchased vehicle information, a list including a plurality of matters to be confirmed in explanation upon delivery of the vehicle corresponding to the business talk;
determine whether each of the matters to be confirmed has been confirmed in the explanation upon delivery of the vehicle based on second speech data and the list, the second speech data being acquired in the explanation upon delivery of the vehicle; and
output a determination result.

9. A non-transitory storage medium storing instructions that are executable by one or more processors and that cause the one or more processors to perform functions comprising:
acquiring purchased vehicle information based on first speech data that is acquired in a business talk for selling a vehicle;
generating, based on the purchased vehicle information, a list including a plurality of matters to be confirmed in explanation upon delivery of the vehicle corresponding to the business talk;
determining whether each of the matters to be confirmed has been confirmed in the explanation upon delivery of the vehicle based on second speech data and the list, the second speech data being acquired in the explanation upon delivery of the vehicle; and
outputting a determination result.

10. The vehicle delivery handling support method according to claim 6, wherein adjusting the explanation items in the list includes omitting some of the explanation items.

11. The vehicle delivery handling support method according to claim 6, further comprising:
determining whether the purchaser has previously purchased a vehicle equipped with the same or equivalent functions; and
when it is determined that the purchaser has previously purchased a vehicle equipped with the same or equivalent functions, omitting some of the explanation items in the list.
